Europäisches Patentamt

(19) European Patent Office

Office européen des brevets

(11) Numéro de publication : **0 236 161**
**B1**

(12) **FASCICULE DE BREVET EUROPÉEN**

(45) Date de publication du fascicule du brevet :
**11.10.89**

(21) Numéro de dépôt : **87400132.4**

(22) Date de dépôt : **20.01.87**

(51) Int. Cl.⁴ : **F 16 F 13/00**

(54) **Cale hydroélastique à suspension centrale, notamment pour la suspension d'un groupe motopropulseur de véhicule automobile.**

(30) Priorité : **30.01.86 FR 8601309**

(43) Date de publication de la demande :
**09.09.87 Bulletin 87/37**

(45) Mention de la délivrance du brevet :
**11.10.89 Bulletin 89/41**

(84) Etats contractants désignés :
**DE ES GB IT**

(56) Documents cités :
**EP–A– 0 027 751**
**EP–A– 0 036 470**
**EP–A– 0 044 908**
**EP–A– 0 163 817**
**DE–A– 1 625 389**
**DE–U– 7 407 909**
**FR–A– 2 555 272**
**GB–A– 2 086 530**
**US–A– 2 540 130**
**PATENT ABSTRACTS OF JAPAN, vol. 10, no. 18 (M-448)[2075], 24 janvier 1986; & JP-A-60 176 802 (TOYOTA JIDOSHA K.K.) 10-09-1985**

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Le Foi, Marcel**
**12, Impasse du Verger**
**F-35410 Chateaugiron (FR)**

(74) Mandataire : **Polus, Camille et al**
**c/o Cabinet Lavoix 2, Place d'Estienne d'Orves**
**F-75441 Paris Cedex 09 (FR)**

Jouve, 18, rue St-Denis, 75001 Paris, France

## Description

L'invention concerne une cale hydroélastique destinée à relier à un support rigide un organe ou un ensemble sur lequel s'exercent des excitations de différentes natures. A titre d'exemple d'application, ces cales peuvent être utilisées pour la suspension d'un groupe motopropulseur par rapport à la structure d'un véhicule automobile.

On sait que, sur un véhicule automobile, les cales élastiques utilisées pour la suspension du groupe motopropulseur doivent assurer à la fois un bon filtrage des vibrations à haute fréquence et faible amplitude, dues aux imperfections d'équilibrage du moteur, et un bon amortissement des trépidations à basse fréquence et forte amplitude provenant de la route.

Ce double résultat peut être obtenu, de façon connue, avec une cale du type comprenant deux chambres remplies de liquide, délimitées en partie par des parois élastiques et reliées par un canal de communication. Ces cales sont normalement prévues pour être placées sous l'organe ou ensemble à isoler. Mais, si ce dernier est placé en dessous de la cale, il est nécessaire de prévoir un montage en porte à faux avec console afin de reporter la charge au-dessus de la cale.

Le document EP-A 36.470 décrit par ailleurs une cale hydroélastique dont l'expérience montre que sa structure ne permet pas un filtrage satisfaisant des vibrations basse fréquence.

En effet, les deux chambres annulaires de cette cale sont reliées par des étranglements qui ne peuvent remplir cette fonction. D'autre part, ces chambres annulaires sont délimitées par des masses élastiques et des rondelles plates sur lesquelles ces masses sont adhérisées. Les bords de sertissage de la paroi 9 enserrent directement la périphérie des rondelles, l'étanchéité étant réalisée par des lèvres elles-mêmes adhérisées sur l'autre face des rondelles.

L'invention a pour but de réaliser une cale qui simplifie considérablement le montage lorsque l'organe à isoler est placé en dessous.

L'invention concerne donc une cale hydroélastique destinée à être interposée entre deux ensembles à isoler l'un de l'autre, comprenant une masse élastique disposée entre deux armatures porteuses, une chambre de travail annulaire et une chambre d'expansion annulaire, remplies de liquide, communiquant entre elles par un canal de communication et étant limitées en partie par des parois élastiques, la cale ménageant un vide central destiné au passage d'une tige de liaison entre l'une des armatures porteuses et l'ensemble auquel elle est reliée.

Suivant l'invention, l'une des armatures porteuses est fixée sur une armature intermédiaire sur laquelle est adhérisée la masse élastique entre une armature intérieure et une armature extérieure, la chambre de travail est délimitée par la masse élastique et une première rondelle de séparation des chambres et la chambre d'expansion est délimitée par une membrane élastique et une deuxième rondelle de séparation, un sous-ensemble constitué par la masse élastique avec ses armatures, les rondelles de séparation et la membrane élastique, étant formé par sertissage du bord libre des armatures intérieure et extérieure.

Un exemple de réalisation fait l'objet de la description qui suit, en référence aux dessins joints dans lesquels :

la Figure 1 est une vue mi-élévation, mi-coupe axiale d'un premier mode de réalisation d'une cale selon l'invention ;

la Figure 2 représente, en demi-coupe axiale, le sous-ensemble comprenant les deux chambres remplies de liquide ;

la Figure 3 est une coupe selon la ligne III-III de la Figure 1 ;

la Figure 4 est une vue en perspective de la cale des Figures 1 à 3 ; et,

la Figure 5 représente en coupe partielle une variante de réalisation de la cale.

La cale représentée comprend une masse 1 en élastomère adhérisée sur une armature intérieure 2, une armature extérieure 3 et une armature intermédiaire 4. Cette masse 1 délimite, avec une première rondelle rigide 5, une chambre de travail 6 de forme annulaire.

La rondelle 5 est plaquée contre une seconde rondelle rigide 7 sur laquelle sont formées deux gorges concentriques 8, 9. La gorge 8 s'étend sur un peu moins d'une circonférence. L'une de ses extrémités est placée face à un orifice 10 de la rondelle 5, tandis que son autre extrémité débouche, par un orifice 11, dans une chambre d'expansion annulaire 12 délimitée par la rondelle 7 et une membrane élastique 13. La gorge 8 constitue ainsi un canal de communication de grande longueur entre les deux chambres 6 et 12.

La membrane élastique 13, bordée par des armatures 14, 15 est maintenue avec les rondelles 5, 7 par sertissage des armatures 2 et 3, ce maintien étant amélioré grâce à la présence des gorges 8 et 9.

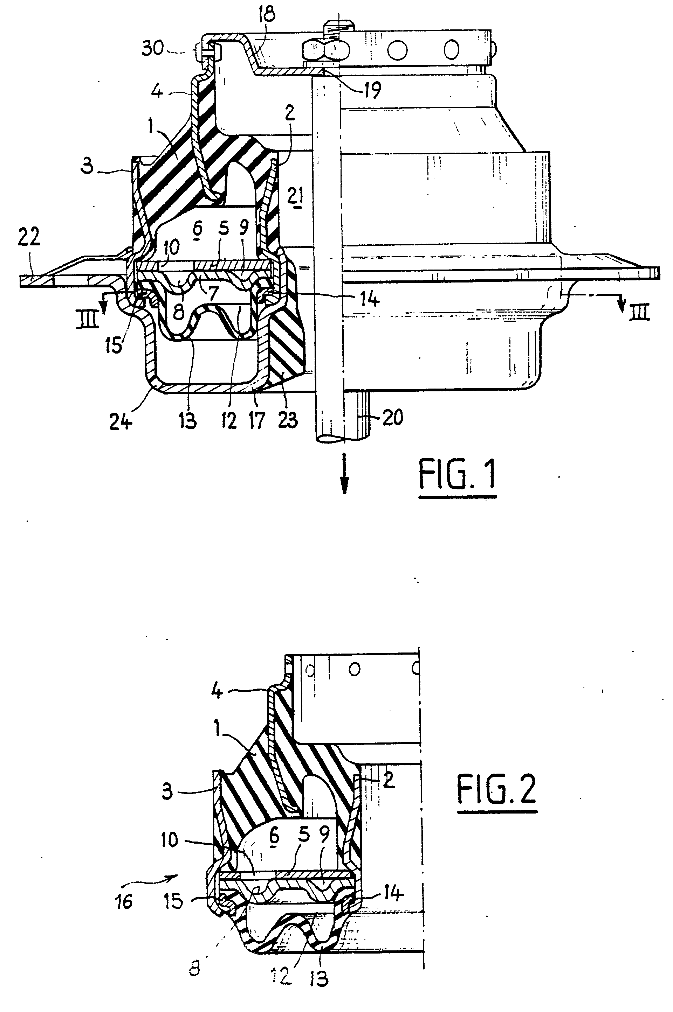

Les constituants qui viennent d'être décrits sont assemblés, de façon classique, en état d'immersion dans un liquide antigel pour former le sous-ensemble 16 représenté sur la Figure 2.

Ce sous-ensemble est ensuite complété avec une armature porteuse inférieure 17 et une armature porteuse supérieure 18.

L'armature porteuse supérieure 18 est fixée à sa périphérie, par soudure, rivetage (rivets 30, Figure 1) ou tout autre moyen, sur l'armature intermédiaire 4. Elle comporte un orifice central 19 permettant la fixation d'une tige 20 passant à travers un vide central 21 de la cale et à laquelle est suspendu un ensemble à isoler, non représenté.

L'armature porteuse inférieure 17 est sertie intérieurement et extérieurement sur le sous-ensemble 16. Elle comporte des oreilles 22 de fixation sur un support non représenté. Une couche d'élastomère 23 peut être disposée à l'intérieur de l'armature 17 pour servir de butée transversale vis-à-vis de la tige 20. Au moins un orifice 24 assure la communication avec l'atmosphère.

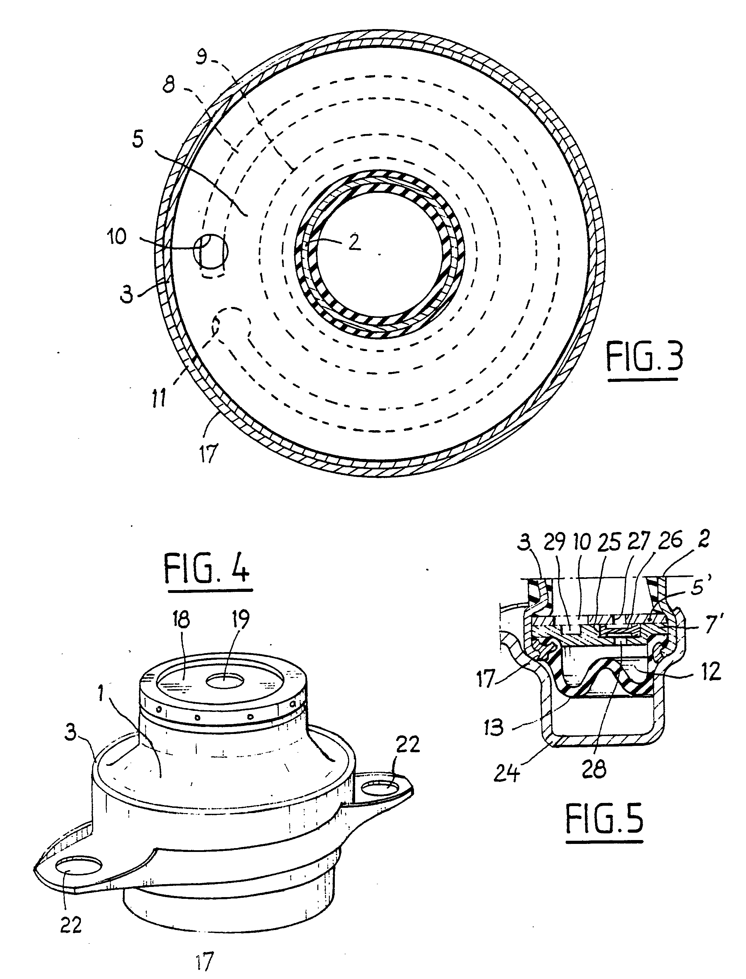

Dans la variante représentée partiellement sur la Figure 5, les rondelles 5' et 7' correspondent, respectivement aux rondelles 5 et 7 du premier mode de réalisation. La rondelle 7' comporte une gorge circulaire 25 dans laquelle est montée une rondelle souple 26, tandis que des orifices 27, 28 ménagés dans les rondelles 5' et 7' assurent la communication de l'une ou l'autre des faces de cette rondelle souple avec les chambres 6 ou 12. La seconde gorge 29 correspond à la gorge 8 de la réalisation précédente. Cette rondelle souple joue le rôle d'une cloison mobile à déplacement limité, dont les avantages sont bien connus (voir notamment le brevet français 79 26 137).

On notera que le canal de communication de grande longueur et de faible section constitué par la gorge 8 permet un bon filtrage des basses fréquences, ce qui n'est pas possible avec les orifices formant étranglements de la cale du EP-A 36.470.

**Revendications**

1. Cale hydroélastique destinée à être interposée entre deux ensembles à isoler l'un de l'autre, par exemple un groupe moto-propulseur et la structure d'un véhicule automobile, comprenant une masse élastique (1) disposée entre deux armatures porteuses (17, 18), une chambre de travail annulaire (6) et une chambre d expansion annulaire (12), remplies de liquide, communiquant entre elles par un canal de communication (8) et étant limitées en partie par des parois élastiques (1, 13), la cale ménageant un vide central (21) destiné au passage d'une tige (20) de liaison entre l'une (18) des armatures porteuses et l'ensemble auquel elle est reliée, caractérisé en ce que l'une (18) des armatures porteuses est fixée sur une armature intermédiaire (4) sur laquelle est adhérisée la masse élastique (1) entre une armature intérieure (2) et une armature extérieure (3), la chambre de travail (6) étant délimitée par la masse élastique et une première rondelle (5, 5') de séparation des chambres (6, 12) et la chambre d'expansion (12) étant délimitée par une membrane élastique (13) et une deuxième rondelle (7, 7') de séparation, un sous-ensemble constitué par la masse élastique (1) avec ses armatures (2, 3, 4), les rondelles (5, 7-5', 7') de séparation et la membrane élastique (13), étant formé par sertissage du bord libre des armatures intérieure (2) et extérieure (3).

2. Cale hydroélastique selon la revendication 1, caractérisée en ce que les rondelles de séparation des chambres (6, 12) comprennent une première rondelle rigide (5-5') percée d'un orifice (10) et une seconde rondelle rigide (7-7') plaquée contre la première et présentant au moins une gorge (8-29) partiellement circulaire, qui débouche par une extrémité dans l'une (6) des chambres, à travers l'orifice (10), tandis que son autre extrémité débouche par un orifice (11) dans la seconde chambre (12), la gorge (8) constituant un canal de communication de grande longueur entre les deux chambres.

3. Cale selon la revendication 1, caractérisée en ce que la membrane élastique (13) est bordée par des armatures (14, 15).

4. Cale selon la revendication 2, caractérisée en ce que l'une (7') des rondelles rigides comporte une gorge circulaire (25) dans laquelle est disposée, face à l'autre rondelle rigide (5') une rondelle souple (26), des orifices (27, 28) ménagés dans les rondelles (5', 7') assurant la communication de l'une ou l'autre des faces de la rondelle souple (26) avec les chambres (6) ou (12).

5. Cale selon l'une quelconque des revendications 2 et 4, caractérisée en ce que l'autre armature porteuse (17) est sertie intérieurement et extérieurement sur le sous-ensemble constitué par la masse élastique (1) avec ses armatures (2, 3, 4), les rondelles rigides (5, 7-5', 7') et la membrane souple (13).

**Claims**

1. A hydroelastic mount adapted to be interposed between two units to be insulated from each other, for example a motor-drive unit and the structure of a motor vehicle, comprising a resilient mass (1) arranged between two carrying armatures (17, 18), an annular work chamber (6) and an annular expansion chamber (12), said chambers being filled with liquid and communicating with each other through a communication channel (8) and being partly defined by flexible walls (1, 13), said mount defining a central space (21) intended to accommodate a connecting rod (20) between one (18) of the carrying armatures and the unit to which it is connected, characterised in that one (18) of the carrying armatures is fixed to an intermediate armature (4) to which is adhesively bonded the resilient mass (1) between an inner armature (2) and an outer armature (3), the work chamber (6) being defined by the resilient mass and a first disc (5, 5') for separating the chambers (6, 12) and the expansion chamber (12) being defined by a flexible membrane (13) and a second separating disc (7, 7'), a sub-assembly consisting of the resilient mass (1) with its armatures (2, 3, 4), the separating discs (5, 7-5', 7') and the flexible membrane (13), being formed by crimping of the free edge of the inner and outer armatures (2) and (3), respectively.

2. Hydroelastic mount according to claim 1, characterised in that the discs for separating the chambers (6, 12) comprise a first rigid disc (5-5') drilled with an orifice (10) and a second rigid disc (7-7') placed flat against the first and having at least one partially circular grocve (8-29) which opens at one end into one (6) of the chambers, through the orifice (10), whilst its other end opens through an orifice (11) into the second chamber (12), the groove (8) constituting a very long communication channel between the two chambers.

3. Mount according to claim 1, characterised in that the flexible membrane (13) is bordered by armatures (14, 15).

4. Mount according to claim 2, characterised in that one (7') of the rigid discs comprises a circular groove (25) in which is arranged, opposite the other rigid disc (5'), a flexible disc (26), whilst orifices (27, 28) formed in the discs (5', 7') ensure that one or other side of the flexible disc (26) communicates with the chambers (6) or (12).

5. A mount according to either of claims 2 and 4, characterised in that the other carrying armature (17) is crimped, internally and externally, on the subassembly consisting of the resilient mass (1) with its armatures (2, 3, 4), the rigid discs (5, 7-5', 7') and the flexible membrane (13).

**Patentansprüche**

1. Hydroelastisches Lager zur Anordnung zwischen zwei voneinander zu isolierenden Baueinheiten, beispielsweise einer Antriebsgruppe und der Struktur eines Kraftfahrzeugs, mit einer elastischen Masse (1), die zwischen zwei Tragteilen (17, 18) angeordnet ist, mit einer ringförmigen Arbeitskammer (6) und mit einer ringförmigen, mit einer Flüssigkeit gefüllten Expansionskammer (12), die miteinander über einen Kanal (8) in Verbindung stehen und die teilweise von elastischen Wänden (1, 13) begrenzt sind, wobei im Lager eine Mittelöffnung (21) vorgesehen ist, die zum Durchtritt einer Verbindungsstange (20) zwischen einem der Tragteile (18) und dem Bauteil dient, mit dem es verbunden ist, dadurch gekennzeichnet, daß eines der Tragteile (18) an einem Zwischenteil (4) befestigt ist, an dem die elastische Masse (1) zwischen einem Innenteil (2) und einem Außenteil (3) anhaftet, wobei die Arbeitskammer (6) von der elastischen Masse und einer ersten der Trennung der Kammern (6, 12) dienenden Unterlegscheibe (5, 5') begrenzt ist, daß die Expansionskammer (12) von einer elastischen Membran (13) und einer zweiten der Trennung dienenden Unterlegscheibe (7, 7') begrenzt ist und daß eine Unter-Baugruppe, die aus der elastischen Masse (1) mit ihren Teilen (2, 3, 4) den Unterlegscheiben (5, 7-5', 7') und der elastischen Membran (13) besteht, durch Verformen des freien Randes des Innenteils (2) und des Außenteils (3) gebildet ist.

2. Hydroelastisches Lager nach Anspruch 1, dadurch gekennzeichnet, daß die der Trennung der Kammern (6, 12) dienenden Unterlegscheiben eine erste starre Unterlegscheibe (5-5') mit einer Öffnung (10) aufweisen sowie eine zweite starre Unterlegscheibe (7-7'), die mit der ersten Unterlegscheibe plattiert ist und die wenigstens eine teilweise kreisförmige Rille (8-29) aufweist, die über die Öffnung (10) an einem Ende in eine der Kammern (6) einmündet, während ihr anderes Ende über eine Öffnung (11) in die zweite Kammer (12) einmündet, wobei die Rille (8) einen langen Verbindungskanal zwischen den beiden Kammern ausbildet.

3. Hydroelastisches Lager nach Anspruch 1, dadurch gekennzeichnet, daß die elastische Membran (13) von den Teilen (14, 15) berandet ist.

4. Hydroelastisches Lager nach Anspruch 2, dadurch gekennzeichnet, daß die eine der starren Unterlegscheiben (7') eine kreisförmige Rille (25) aufweist, in der sich gegenüber der anderen starren Unterlegscheibe (5') eine biegsame Unterlegscheibe (26) befindet, wobei die in den Unterlegscheiben (5', 7') angebrachten Öffnungen (27, 28) die Verbindung zwischen der einen oder anderen der Flächen der biegsamen Unterlegscheibe (26) mit den Kammern (6 oder 12) sicher stellen.

5. Hydroelastisches Lager nach Anspruch 2 oder 4, dadurch gekennzeichnet, daß das andere Tragteil (17) innen und außen die Unter-Baugruppe, bestehend aus der elastischen Masse (1) mit ihren Teilen (2, 3, 4), den starren Unterlegscheiben (5, 7-5', 7') und der biegsamen Membran (13), einfaßt.

FIG. 1

FIG. 2

1

FIG.3

FIG.4

FIG.5